(19) Europäisches Patentamt

European Patent Office

Office européen des brevets

(11) **EP 4 047 246 B1**

(12) **EUROPEAN PATENT SPECIFICATION**

(45) Date of publication and mention
of the grant of the patent:
**10.04.2024 Bulletin 2024/15**

(21) Application number: **22157161.5**

(22) Date of filing: **17.02.2022**

(51) International Patent Classification (IPC):
*F16H 61/47* (2010.01)   *B60K 25/00* (2006.01)
*E02F 9/22* (2006.01)

(52) Cooperative Patent Classification (CPC):
**F16H 61/47; B60K 25/00; E02F 9/2228;**
B60K 2025/065; B60Y 2200/15; B60Y 2200/40;
B62D 5/07; E02F 3/3654

(54) **A CONTROL SYSTEM FOR A VEHICLE AND A RELATED CONTROL METHOD**

STEUERSYSTEM FÜR EIN FAHRZEUG UND ENTSPRECHENDES STEUERUNGSVERFAHREN

SYSTÈME DE COMMANDE POUR VÉHICULE ET PROCÉDÉ DE COMMANDE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.02.2021 IT 202100003659**

(43) Date of publication of application:
**24.08.2022 Bulletin 2022/34**

(73) Proprietor: **CNH Industrial Italia S.p.A.**
**10156 Torino (IT)**

(72) Inventors:
• **Aresta, Alessio**
**72023 Brindisi Mesagne (IT)**
• **Carvignese, Cosimo**
**72023 Mesagne (BR) (IT)**
• **Venezia, Antonio**
**10153 Torino (IT)**

(74) Representative: **CNH Industrial IP Department**
**Leon Claeysstraat 3A**
**8210 Zedelgem (BE)**

(56) References cited:
**IT-A1- BO20 090 572    US-A- 2 988 889
US-A- 4 343 151          US-A- 4 485 623
US-A1- 2009 302 141**

**Description**

TECHNICAL FIELD

The invention concerns a control system for installation on a vehicle, in particular a work vehicle, more in particular a telehandler.

The invention also concerns a control method for an auxiliary hydraulic unit to be installed on the vehicle.

BACKGROUND OF THE INVENTION

Usually, work vehicles are provided with an auxiliary unit having a controllable implement or special attachment, such as a brush, a snow blower, a truss boom, a fork lifter, and the like.

The implement is often controlled via a hydraulic motor of the auxiliary unit, which converts the pressure of a hydraulic flow into torque and angular displacement.

The vehicle includes an engine and a pump that is driven by the engine to provide the flow to the hydraulic motor of the auxiliary unit and normally to every other hydraulic consumers mounted on the vehicle.

Therefore, the auxiliary unit receives only a portion of the overall flow processed by the pump. In particular, for example, a main portion of the flow is reserved for supplying the steering assembly of the vehicle. The remainder of the flow is thus divided between the other consumers, possibly according to a priority scale as shown in US4485623A.

As known in the field, the output flow rate of the pump is directly correlated to the speed of the engine. Hence, the flow rate supplied to the auxiliary unit is affected by the engine control, in particular when a driver of the vehicle requires a speed change or when the latter is caused by an engine load variation, even in the case of an electronic speed control on the engine.

Due to the flow rate variations, the speed of the hydraulic motor is subject to sudden changes, which means an inconstant behavior of the implement.

Nevertheless, in general, the driver normally has the control of the implement through the manipulation of a joystick or a handle. Therefore, the driver can compensate unwanted variations of the speed of the hydraulic motor.

However, the need is felt to reduce the interactions between the driver and the joystick, such that the same driver can specifically concentrate on controlling the advancement of the vehicle, rather than distract himself with the manipulation of the joystick.

The aim of the invention is to satisfy the above need, preferably in a simple and economic fashion.

SUMMARY OF THE INVENTION

According to the invention, a control system and a control method are provided as set forth by independent claims.

Dependent claims disclose particular embodiments of the invention.

BRIEF DESCRIPTION OF DRAWINGS

For a better understanding of the present invention, a preferred embodiment is disclosed in the following, by way of a non-limiting example, with reference to the attached drawings wherein:

- Figure 1 is a perspective view of a vehicle, specifically a telehandler, comprising a control system according to an embodiment of the invention;
- Figure 2 is a scheme representing some components of the vehicle and their interaction;
- Figure 3 shows two time plots regarding measured experimental trends of the engine speed and the engine torque of the vehicle;
- Figure 4 is a time plot in which a portion of the experimental trend of the engine speed in Figure 3 is compared to a predicted engine speed by the control system;
- Figure 5 is a block diagram representing operations of a control method according to an embodiment of the invention.

DETAILED DESCRIPTION OF THE INVENTION

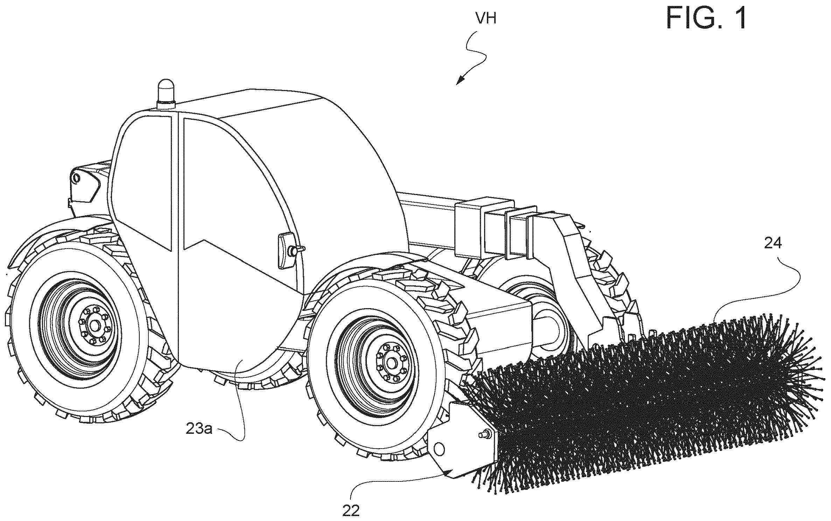

In Figure 1, reference number VH indicates a vehicle, more precisely a work vehicle, in particular a telehandler.

Vehicle VH mounts a hydraulic auxiliary unit 22, in particular on a front portion of a vehicular frame 23a. The auxiliary unit 22 comprises an implement 24, specifically a brush for snow cleaning. Evidently, the brush is a mere example and may be replaced by other components, such as any other known attachment for a work vehicle or a telehandler.

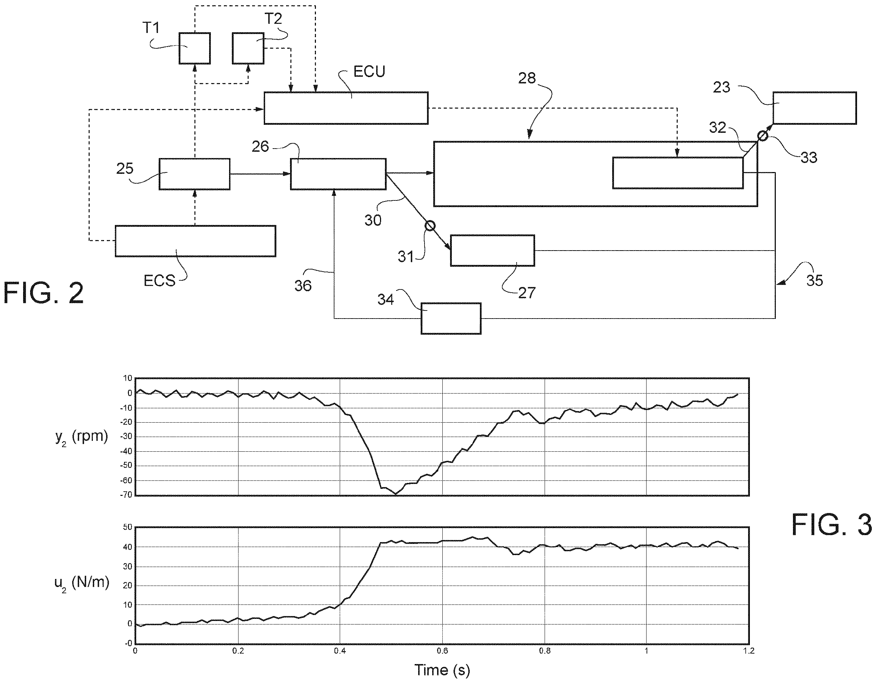

The auxiliary unit 22 also comprises a hydraulic driving device 23 (schematically shown in Figure 2) for driving the implement 24, e.g. a hydraulic motor. The driving device 23 is coupled to the implement 24; for instance, the hydraulic motor has a rotor transmitting the rotational motion thereof to the brush.

In order to drive the implement 24, the auxiliary unit 22 and more precisely the driving device 23 needs to be supplied with a flow rate of a liquid, in particular a hydraulic oil.

The auxiliary unit 22 is configured to drive the implement 24, such that the latter have a constant speed when the supplied flow rate is constant. Therefore, for example, the driving device 23 may be coupled to the implement 24 in a direct manner or via a transmission with a constant transmission ratio. Furthermore, the driving device 23 has an output member whose speed will be constant when the supplied flow rate is constant.

As schematically represented in Figure 2, the vehicle VH comprises:

- an engine 25;
- a hydraulic pump 26 coupled to the engine 25;
- a steering assembly 27; and
- a flow sharing hydraulic plant 28.

The pump 26 is driven by the engine 25 thereby delivering an output flowrate $Q$. In particular, the pump 26 is a variable displacement pump. Hence, the flowrate $Q$ may be computed via the following equation 1:

$$Q = v_g\, n\, \eta_v \qquad (1)$$

where $v_g$ is the pump displacement, $n$ is the speed of the engine 25 or the engine speed, and $\eta_v$ is the volumetric efficiency of the pump 26.

For example, the flowrate $Q$ may be useful for supplying the steering assembly 27 if a driver of the vehicle maneuvers the steering assembly 27 itself.

As known in the field, the pump displacement $v_g$ may be controlled electronically or hydraulically. Therefore, the value of the pump displacement $v_g$ may be set based on operative conditions of the vehicle VH. For example, when the steering assembly 27 is maneuvered, setting the pump displacement $v_g$ to a constant maximum value $v_g^{max}$ may be expedient.

Equation 1 highlights the linkage and, more precisely, the proportionality between the flowrate $Q$ and the engine speed $n$. Such a proportionality would have been existed even in case the pump 26 had been a fixed displacement pump, which is also possible according to the invention.

A portion $Q_s$ of the flow rate $Q$ is supplied to the steering assembly 27 through a hydraulic line 30 of the vehicle VH based on a flow rate request of the steering assembly 27. More precisely, the vehicle VH comprises a control valve 31 mounted on the hydraulic line 30 for adjusting the portion $Q_s$. Control valve 31 is controlled to satisfy the request of the steering assembly 27. In other words, the steering assembly 27 has the highest priority in being supplied by the pump 26.

The remaining portion of the flowrate $Q$ is supplied to the plant 28, which comprises at least a hydraulic line 32 and a control valve 33 that is mounted on the hydraulic line 32 to adjust the flow through there. The hydraulic line 32 is hydraulically connected to the auxiliary unit 22 and, more precisely, to the driving device 23, such that a portion $Q_a$ of the flowrate $Q$ may be supplied to the auxiliary unit 22. Control valve 33 adjusts the portion $Q_a$.

Preferably, the plant 28 comprises a plurality of not shown hydraulic lines to supply respective portions $Q_i$ of the flowrate $Q$ to corresponding hydraulic units or consumers, not shown too. Moreover, the plant 28 comprises a plurality of not shown control valves mounted respectively on the hydraulic lines to adjust the portions $Q_i$.

The sum of the portions $Q_i$ with the portion $Q_a$ may be defined as a portion $Q_h$ consumed by the plant 28. Based on the control of the control valves, including control valve 33, the sum of portions $Q_h$ and $Q_s$ may be less or equal than the flow rate $Q$. When less, a residual portion $Q_t$ shall be discharged from the plant 28 and the steering assembly 27. For this reason, the vehicle VH further comprises a tank 34 and a discharge circuit 35 connecting hydraulically the steering assembly 27 and the plant 28 to the tank 34, respectively, such that the residual portion $Q_t$ is delivered to the tank 34 and stored therein.

Furthermore, the vehicle VH comprises a further hydraulic line 36 connecting hydraulically the tank 34 and the pump 26, such that the pump 26 can be supplied with liquid stored in the tank 34 to process the flow rate $Q$.

The vehicle VH comprises a control system, which includes a control unit ECU that controls the control valves, including control valve 33, by emitting respective control inputs $I_i$ for the control valves, for instance electric currents or voltages.

Clearly, the control valves are provided with servo actuators and processors, such that suitable control laws, possibly open loop or closed loop control laws can be applied on the same control valves. Therefore, control inputs $I_i$ will correspond to actual driving actions for the control valves, for example the displacement of a shutter or a spool, the opening of a port, and similar matters for known kind of control valves. Hence, the portions $Q_i$ will be a function of the respective control inputs $I_i$.

In particular, control valves are proportional valves, in the sense that the portions $Q_i$ are proportional to the flow rate received by the plant 28, i.e. the difference between the flow rate $Q$ and the portion $Q_s$.

In other words, a ratio of one portion $Q_i$ to said difference is a coefficient $K_1$, being at least a function of the corresponding control input $I_i$.

The coefficient $K_1$ may be a function of all the control inputs $I_i$ depending on the consumed portion $Q_h$ and accordingly to the residual portion $Q_t$. In detail, if the residual portion $Q_t$ is null, all the difference between the flowrate $Q$ and the portion $Q_s$ is consumed into the plant 28, which means that the available difference will be shared by the consumers based on the overall status of the control valves and according to the natural principles of hydraulics. More precisely, each control input $I_i$ will affect all the portions $Q_i$. Practically, the control inputs $I_i$ will set the priorities of the corresponding control valves.

On the other hand, when the portion $Q_t$ is greater than zero, the portion $Q_i$ is only a function of said difference and of the corresponding control input $I_i$.

In the following, the control input for control valve 33 will be indicated with $I_a$, as well as the corresponding portion will be indicated with $Q_a$.

In view of the above, assuming the maximum value $v_g^{max}$ for the pump displacement $v_g$, the following equation 2 holds:

$$\begin{cases} \begin{cases} Q_a = f_a(I_a)(v_g^{max}\, n\, \eta_v - Q_s) \\ Q_t = \left[1 - \sum_{i=1}^{N} f_i(I_i)\right](v_g^{max}\, n\, \eta_v - Q_s) \end{cases} & if \sum_{i=1}^{N} f_i(I_i) \le 1 \\ \begin{cases} Q_a = \dfrac{f_a(I_a)}{\sum_{i=1}^{N} f_i(I_i)}(v_g^{max}\, n\, \eta_v - Q_s) \\ Q_t = 0 \end{cases} & if \sum_{i=1}^{N} f_i(I_i) > 1 \end{cases} \quad (2)$$

where $f_a$ indicates a scalar function of the control input $I_a$, which depends on the constructional features of control valve 33. $f_i$ are the analogous scalar functions to $f_a$ for the control valves other than control valve 33.

Equation 2 shows that function $f_a$ coincides here with the coefficient $K_1$ when the portion $Q_t$ is not null, whereas corresponds to a priority weight when the portion $Q_t$ is null. In the latter case, the coefficient $K_1$ is the ratio of function $f_a$ to the sum of all the functions $f_i$.

The vehicle VH comprises a plurality of commands, e.g. handles, joysticks, buttons, and the like, that are usable by the driver for manually controlling the control valves, including control valve 33. The commands are electrically coupled, indeed, to the control unit ECU, which is configured to emit the control inputs $I_i$ according the manual operation of the commands themselves.

In order to stabilize the behavior of the implement 24 with respect to fluctuations of the engine speed $n$, which allows the driver to avoid a continuous operation of the corresponding command, the portion $Q_a$ could be controlled to be maintained substantially constant.

This occurs when the total derivative of the portion $Q_a$ over time $t$ is null; the calculation of this total derivative is shown in equation 3:

$$\frac{dQ_a}{dt} = \frac{\partial Q_a}{\partial I_a}\frac{dI_a}{dt} + \frac{\partial Q_a}{\partial n}\frac{dn}{dt} + \frac{\partial Q_a}{\partial Q_s}\frac{dQ_s}{dt} \quad (3)$$

From equations 3 and 1, the following equations 5a, 5b are derived for the two conditions of equation 2:

$$\dot{Q}_a = \frac{\partial f_a(I_a)}{\partial I_a} \left( v_g^{max} \, n \, \eta_v - Q_s \right) \dot{I}_a + f_a(I_a) v_g^{max} \, \eta_v \, \dot{n} - f_a(I_a) \, \dot{Q}_s \quad (5a)$$

$$\dot{Q}_a = \frac{\frac{\partial f_a(I_a)}{\partial I_a} \sum_{i \neq a} f_i(I_i)}{\left( f_a(I_a) + \sum_{i \neq a} f_i(I_i) \right)^2} \left( v_g^{max} \, n \, \eta_v - Q_s \right) \dot{I}_a + \frac{f_a(I_a)}{\sum_{i=1}^{N} f_i(I_i)} v_g^{max} \, \eta_v \, \dot{n} - \frac{f_a(I_a)}{\sum_{i=1}^{N} f_i(I_i)} \dot{Q}_s \quad (5b)$$

where the dot over the symbols is used to represent the time derivative.

The derivative $\dot{Q}_s$ depends on how the steering assembly 27 is maneuvered. A significant maneuvering of the steering assembly 27 is performed by the driver only when necessary, for example, when the vehicle VH should be redirected. This is the case after the cleaning of a straight portion of a street to proceed with cleaning a further different straight portion of the same street. In this condition, the driver is in any case focused on maneuvering the steering assembly. Therefore, the operation of the implement 24 becomes less relevant. For example, the driver may decide to stop the implement 24 temporarily while maneuvering the steering assembly 27 to restart the operation of the implement 24 only when the vehicle VH is aligned to the further straight portion.

In view of the above, significant maneuverings of the steering assembly will not be considered; thus, only the common maneuvers to maintain the vehicle VH along a straight or uniformly curved direction will be considered. Therefore, the derivative $\dot{Q}_s$ may be assumed negligible.

With this assumption, the following equations 7a, 7b hold to nullify substantially the derivative $\dot{Q}_a$:

$$\dot{I}_a \cong -\frac{f_a(I_a)}{\frac{\partial f_a(I_a)}{\partial I_a}} \frac{\dot{n}}{n} \quad (7a)$$

$$\dot{I}_a \cong -\frac{f_a(I_a)}{\frac{\partial f_a(I_a)}{\partial I_a}} \frac{\sum_{i=1}^{N} f_i(I_i)}{\sum_{i \neq a} f_i(I_i)} \frac{\dot{n}}{n} = \quad (7b)$$

In both cases, as directly derivable from equations 7a, 7b, the derivative $\dot{I}_a$ is computed as the negative of a product of a coefficient $K_2$ (the coefficient assumes different formulations in equations 7a, 7b) and a ratio of the derivative $\dot{n}$ to the engine speed $n$. The derivative $\dot{n}$ represents or is a time variation of the engine speed $n$ at a given instant (instantaneous speed value), here expressed in infinitesimal terms. As well, the derivative $\dot{I}_a$ represents or is a time variation of the control input $I_a$. Those time variations occur over a time interval, being in particular an infinitesimal time interval from the given instant mentioned above and another instant, namely a first and a second instant.

The coefficient $K_2$ is the ratio of the coefficient $K_1$ to a further coefficient $K_3$. As derivable from equations 7a, 8a, the coefficient $K_3$ represents a partial derivative of the coefficient $K_1$ with respect to the control input $I_a$.

The time variation of the control input $I_a$ computed as above is the one causing the portion $Q_a$ to be constant over the time interval. Therefore, the latter time variation is a useful first parameter for the control of control valve 33, at least when the portion $Q_s$ is substantially constant over the time interval.

The relationships of equations 7a, 7b may be also transferred in the discrete domain, as in the following equations 9a, 9b:

$$I_a(k+1) \cong I_a(k) - \frac{f_a}{g_a} \frac{n(k+1) - n(k)}{n(k)} \quad (9a)$$

$$I_a(k+1) \cong I_a(k) - \frac{f_a}{g_a} \frac{\sum_{i=1}^{N} f_i}{\sum_{i \neq a} f_i} \frac{n(k+1) - n(k)}{n(k)} \quad (9b)$$

where $g_a$ indicates the partial derivative of function $f_a$ with respect to the control input $I_a$ and $k$ indicates the current time sample. Preferably, $k$ is an integer positive index.

Equations 9a, 9b shows the computation of the control input $I_a$ at the time sample $k$ plus one, i.e. the control input $I_a$ at the end of the time interval in which variations occur or the second instant, as well. The control value of control input $I_a$ at the second instant appears a linear combination of parameters, including the first parameter and the control value of the control input $I_a$ at the first instant.

The same holds analogously in the case of infinitesimal variations; indeed, the computation of the control input $I_a$ will follow the time integration of the infinitesimal variation, i.e. the first parameter. In the same way, the control value at the second instant will result as a linear combination as above.

Control unit ECU is configured to determine the control value that the control input $I_a$ should have at the second instant such that the portion $Q_a$ remains substantially constant. Then, control unit ECU is also configured to emit the determined control value at the second instant to control the control valve 33.

For the above purpose, control unit ECU needs to have information about the speed value of the engine speed $n$ at the first instant and about the variation thereof over the time interval from the first to the second instant, such that the ratio of that variation to the speed value may be computed, for example as in equations 7a, 7b, 9a, 9b.

To fulfill this need, for example, the control system may comprise an engine controller ECS that is electrically coupled to or forms part of control unit ECU and is configured to control the engine speed $n$ based on a signal generated from a specific command of the vehicle VH, whereby the command is coupled to the engine controller ECS and is operable by the driver for setting the desired engine speed $n$. The engine controller ECS may control the engine speed $n$ in an open or closed loop fashion. Anyway, control unit ECU is configured in this case to extract information from the engine controller about the commanded engine speed $n$ at any instant. The engine controller ECS and/or control unit ECU may evaluate speed values of the commanded engine speed $n$ at any time instant. The speed values evaluated by the engine controller ECS may coincide with the information extracted by control unit ECU.

Alternatively or additionally, for example, the control system may comprise a first transducer T1 coupled to the engine 25 and control unit ECU, as well as configured to detect a quantity indicative of the engine speed $n$ and to generate a signal associated to the detected quantity. The detection of the quantity, as well as the generation of the signal may be regarded as an evaluation of the engine speed $n$, more precisely of speed values thereof at any time instant. Control unit ECU is configured in this case to extract information from the signal generated by transducer T1, thereby evaluating speed values thereof at any time instant, included the first and the second instant.

In view of the above, in particular, control unit ECU obtains or evaluate the speed values of the engine speed n for evaluating the time variation thereof over the time interval only at the second instant.

Therefore, in this case, control unit ECU controls control valve 33 with a delay coinciding with the time interval, e.g. with a delay of one time sample in the discrete domain.

Furthermore, control unit ECU needs information about coefficient $K_2$, which, exactly as $K_1$, may be a function of just the control input $I_a$ or all the control inputs $I_i$, based on the control inputs $I_i$ themselves (see, for example, the if condition of equation 2).

Control unit ECU stores a condition associated to the control inputs $I_i$. When the condition is satisfied based on the control inputs $I_i$, the coefficient $K_2$ is a function of the control input $I_a$; else, the coefficient $K_2$ is a function of all the control inputs $I_i$.

Control unit ECU is configured to verify if the stored condition is satisfied or not, based on the control inputs $I_i$. Clearly, control unit ECU can be configured to evaluate each of the control inputs $I_i$, included the control input $I_a$, because control unit ECU is also configured to emit them.

Therefore, control unit ECU may be configured to evaluate the control value of the control input $I_a$ and, preferably, the control values of the other control inputs $I_i$ at the first instant.

In addition, the control system may comprise a plurality of not shown sensors configured to acquire quantities indicative of the control inputs $I_i$ emitted by control unit ECU. Those sensors are coupled to control unit ECU, which is configured to extract information about the acquired quantities and to evaluate the control values, as well, based on the acquired quantities. Sensors are in this case a means for the evaluation of the control values.

Control unit ECU stores, furthermore, at least one mapping $\alpha_a$ for determining the coefficient $K_2$ as a function of just the control input $I_a$.

This mapping $\alpha_a$ may be provided, preferably, by processing experimental data related to the vehicle VH, e.g. taken during tests of the vehicle VH, in which the engine speed $n$ is varied randomly and the control input $I_a$ needed to keep constant the portion $Q_a$ is observed accordingly for any variation of the engine speed $n$. For example, least squares regression is suitable for obtaining the mapping $\alpha_a$.

Preferably, control unit ECU stores a further mapping $\beta_a$ for determining the coefficient $K_2$ as a function of the control input $I_a$ when the same coefficient $K_2$ is a function of all the control inputs $I_i$, e.g. when the abovementioned condition is not satisfied. The mapping $\beta_a$ may be provided, preferably, in a manner similar to that just disclosed for the mapping $\alpha_a$.

In view of the above, a possible open loop control law that can be implemented in control unit ECU is represented by the equation 10:

$$I_a(k+1) = I_a(k) - \begin{cases} \alpha_a \dfrac{n(k+1) - n(k)}{n(k)} & if \displaystyle\sum_{i=1}^{N} f_i(I_i) \le 1 \\[4mm] \beta_a \dfrac{n(k+1) - n(k)}{n(k)} & if \displaystyle\sum_{i=1}^{N} f_i(I_i) > 1 \end{cases} \qquad (10)$$

According to the invention, control unit ECU is configured to:

- determine the coefficient $K_2$ as a function of the control value of the control input $I_a$ at the first instant;
- computing the aforementioned first parameter as the negative of the product of the coefficient $K_2$ and a ratio of the time variation of the engine speed $n$ over said interval of time to the speed value of the engine speed $n$ at the first instant; and
- emit the control input $I_a$ at the second instant with the control value equal to a linear combination of parameters including the control value at the first instant and the first parameter.

Alternatively or additionally to the mappings $\alpha_a$, $\beta_a$, the control unit ECU may store a linear mapping that comprises a linear function of the control input $I_a$ for mapping the control input $I_a$ into the coefficient $K_1$. According to this latter mapping, the coefficient $K_3$ may be easily derived by the control unit ECU as a constant, since the latter coefficient $K_3$ represents the partial derivative of the coefficient $K_1$. In other words, the function $f_a$ may be represented as a line (for example by means of a slope-intercept form where the abscissa is the control input $I_a$), such that the function $g_a$ is a constant coincident with the slope of the line.

Alternatively or additionally, each function $f_i$, possibly including the function $f_a$, may be represented by a linear or a nonlinear mapping stored in control unit ECU. Also, the function $g_a$ may be represented by a linear or a nonlinear mapping stored in control unit ECU. Thus, control unit ECU can derive coefficients $K_1$, $K_2$, $K_3$, e.g. as computed in equations 7a, 7b, 9a, 9b, from functions $f_i$ and $g_a$.

Any of the mappings stored in control unit ECU may be obtained applying linear or nonlinear regression algorithms, based on the linearity or nonlinearity of the mapping, to properly collected experimental data.

Advantageously, other than the already discussed parameters, the aforementioned linear combination may include parameters based on a prediction of a future time variation of the engine speed $n$.

To perform the prediction, control unit ECU stores a model of the engine 25 that links an engine quantity to the future time variation that shall be predicted.

For example, the engine quantity may be associated to a signal $\mu$ processed by the control unit ECU. This signal $\mu$, for example, may be associated to an output torque of the engine 25 or an engine torque $\tau$.

Preferably, the control unit ECU comprises a transducer T2 that is coupled to both the engine 25 and control unit ECU. Transducer T2 is configured to detect the engine quantity, which is indicative of the engine torque $\tau$, and to generate the signal $\mu$ associated to the engine quantity. Control unit ECU acquires the signal $\mu$ from transducer T2.

Alternatively, control unit ECU generates the signal $\mu$ associated to the engine torque $\tau$ based on the information about the engine speed $n$ and on a stored characteristic curve of the engine 25 (e.g. a speed-power or a speed-torque function/curve). For example, control unit ECU evaluates the speed value of the engine speed $n$ at the second instant or at the first instant and associates the evaluated value to a torque value of the engine torque $\tau$ by means of the stored characteristic curve.

The stored model links at least the future time variation of the engine speed $n$ to a value of the signal $\mu$, the value being associated to a torque value of the engine torque $\tau$, preferably at the second instant.

With this model, control unit ECU is configured to predict the future time variation based on the torque value.

However, control unit ECU actually performs the prediction only when the time variation of the signal $\mu$, which is indicative of a corresponding time variation of the engine torque $\tau$, during the time interval from the first instant to the second instant, has a significant magnitude. Indeed, only a significant time variation of the engine torque $\tau$ can cause a significant time variation of the engine speed $n$, whose rejection e.g. by the engine controller ECS could require the lapse of some time samples, thus rendering the prediction appropriate to anticipate the control of control valve 33 by control unit ECU for the constancy of the portion $Q_a$. As well, indeed, significant time variations of the engine speed $n$ may affect the responsiveness of the control system to maintain the portion $Q_a$ constant over time, thereby rendering the prediction appropriate. Otherwise, the prediction becomes optional when the time variations are not significant and may be avoided, e.g. to not introduce instabilities in the control of control valve 33. The expression significant is intended in the sense that the magnitude of the variation overcomes a threshold or is greater than the threshold, in particular stored in control unit ECU.

For example, the interval of time may last less than 15 ms, preferably 10 ms.

For example, with the interval lasting 10 ms, a time variation of the signal $\mu$ can be considered significant when greater than 3%, in percentage terms. Thus, the threshold may be equal to 3%, without any loss of generality. Indeed, the threshold may be higher or lower, or even null in a possible case where the prediction is constantly performed. The threshold depends actually on the features of the engine 25 and on its operation conditions. A set of thresholds may be calibrated experimentally and stored into control unit ECU to be used according to respective specific operative conditions of the engine 25.

Then, the parameters of the abovementioned linear combination include the predicted time variation when the magnitude of the time variation of the signal $\mu$ over said time interval overcomes the threshold. The linear combination may also include always, for example, the predicted time variation; however, in this case, the latter is null when the magnitude does not overcome the threshold, i.e. preferably when the prediction has not occurred.

Practically, this means that the computation of the control input $I_a$ to be emitted at the second instant includes the addition of the control value of the control input $I_a$ at the first instant, the abovementioned first parameter, and the predicted time variation multiplied for a proportional gain.

The Applicant has retrieved through simulations and experiments that the addition of the predicted time variation in the linear combination has beneficial effects in terms of promptness and responsiveness of the control system against time variations of the portion $Q_a$.

The proportional gain is preferably selected through a tuning procedure during an experimental calibration process of the control system installed on the vehicle VH together with the auxiliary unit 22. For example, the tuning is performed by variating the values of the gain while observing accordingly the respective values assumed by the time variations of the portion $Q_a$ over the time interval between the first and the second instant. A proper value of the gain is preferably selected when the time variation of the portion $Q_a$ is less than a threshold, conveniently stored in control unit ECU. Alternatively, known optimization processes may be used for the tuning.

The Applicant has retrieved that also the addition of an integrative contribution in the linear combination has a beneficial effect on the control system. Thus, the parameters of the linear combination further include the time integral of the predicted time variation, again when the above mentioned magnitude is greater than the threshold.

Similarly, the integral in the linear combination is multiplied by a respective integrative gain. In a similar manner for the proportional gain, the integrative gain can be tuned as described for the proportional gain and together therewith in a jointly fashion. The integrative contribution is present in the linear combination when also the proportional contribution is present. Otherwise, both the contributions are absent or null.

Preferably, the model of the engine 25 stored into control unit ECU comprises a nonlinear transfer function $P(s)$ in a frequency domain.

For example, the transfer function $P(s)$ has the following form expressed by equation 12:

$$ P(s) = \frac{N(s)}{T(s)} = K \frac{(1 + a\,s + b\,s^2)}{(1 + c\,s + d\,s^2)} e^{-T_d s} \quad (12) $$

where $N(s)$ represents the engine speed in the frequency domain (frequency or Laplace variable $s$), $T(s)$ represents the engine torque $\tau$ in the frequency domain. Furthermore, $a, b, c, d, T_d, K$ are the model parameters of the transfer function $P(s)$.

The transfer function of equation 12 is exemplary and many appropriate alternative forms can be chosen. Here, the transfer function has a polynomial factor and an exponential factor.

The model parameters may be identified using known identification algorithms applied onto experimental data.

The parameter $T_d$ represents the time delay according to which the engine speed $n$ feels the variation of the engine torque $\tau$ by variating accordingly. In particular, an increase of the engine torque $\tau$ corresponds to a delayed drop of the engine speed $n$ after $T_d$ time samples.

The determination of the parameter $T_d$ may be derived from experimental signals respectively indicative of the engine torque $\tau$ and the engine speed in the time domain, i.e. an experimental input signal $u$ and an experimental output signal $y$.

In particular, the respective initial conditions of the signals $u, y$ may be subtracted to the whole signals $u, y$, thereby obtaining normalized signals $u_1, y_1$, respectively.

The time delay, i.e. the parameter $T_d$ can be identified for example by evaluating the time needed such that a variation of the signal $u_1$ occur with the same magnitude and opposite sign also in the signal $y_1$.

After the identification of the parameter $T_d$, the signals $u_1, y_1$ can be processed to remove the time delay, thus obtaining new signals $u_2, y_2$.

Then, the other model parameters can be estimated via non linear least squares regression or Gaussian/Newton method from the signals $u_2, y_2$, which are plotted in figure 3. Figure 3 clearly shows the time correspondence between the increase of the signal $u_2$ and the drop of the signal $y_2$.

All the identification steps of the transfer function $P(s)$ described above can be performed by control unit ECU, once the signals $u, y$ are stored therein or provided thereto.

Preferably, the prediction of the time variation of the engine speed $n$ is based on a limit of the transfer function $P(s)$ as the frequency $s$ goes to infinite.

More in particular, when the parameter $T_d$ is negligible, this limit, also known as peak of transient response, is a constant that represents a gain between an increase of the engine torque $\tau$ and a corresponding drop of the engine speed $n$.

Accordingly, it holds the following equation 13:

$$G_{\infty} = \lim_{s \to \infty} P(s) = \lim_{s \to \infty} K \frac{(1 + a\,s + b\,s^2)}{(1 + c\,s + d\,s^2)} = K \frac{b}{d} \quad (13)$$

where $G_{\infty}$ represents the gain or the peak transient response.

Using the gain $G_{\infty}$, control unit ECU may predict the time variation of the engine speed $n$ over a large time interval, i.e. lasting more than one time sample $k$. More in particular, the large time interval lasts from the second instant, in which the magnitude of the time variation of the signal $\mu$ overcomes the corresponding threshold, to a third instant.

The duration of the time interval from the second to the third instant may be set in advance, for example based on experimental tests for evaluating the accuracy of the prediction, and stored in control unit ECU.

More in detail, control unit ECU evaluates the magnitude of the time variation of the signal $\mu$ and the slope of the same time variation, e.g. by taking the derivative of signal $\mu$. Then, control unit ECU predicts the future trend of the signal $\mu$ by linearly propagating or prolonging the signal $\mu$ from the second instant to the third instant, namely maintaining constant the evaluated slope. In this manner, control unit ECU predicts the signal $\mu$ at the third instant and the time variation of the signal $\mu$ from the second instant up to the third instant.

Hence, control unit ECU multiplies the gain $G_{\infty}$ to the magnitude of the predicted time variation of the signal $\mu$, thereby directly obtaining a corresponding predicted time variation of the engine speed $n$ from the second instant up to the third instant.

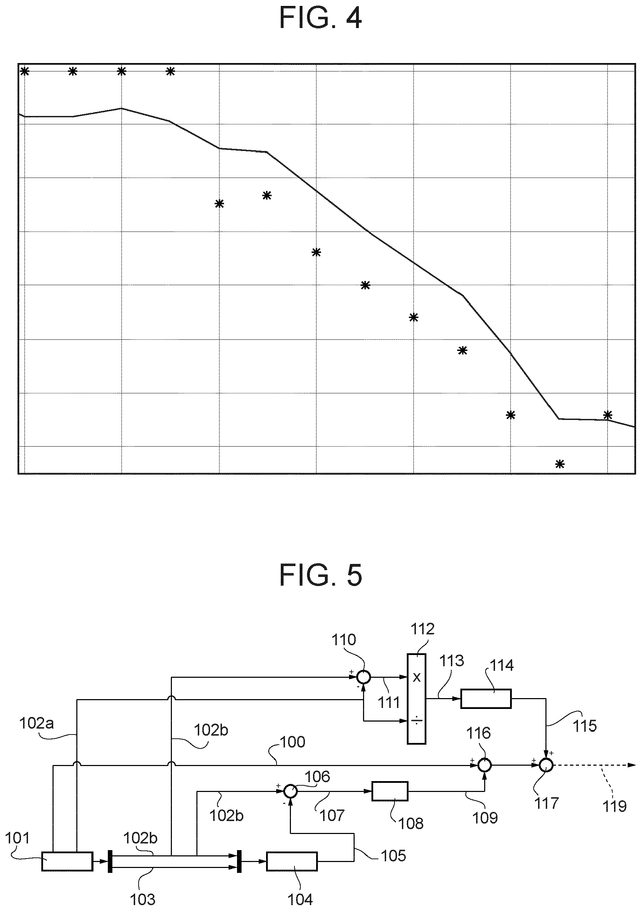

Figure 4 shows a result of a prediction performed via the gain $G_{\infty}$ of the output signal $y_2$ of figure 3 starting from the input signal $u_2$. The solid line refers to the measured output signal $y_2$, whereas the bullets refers to the predicted values. As visible in figure 4, the prediction shows good results in terms of accuracy and anticipation of the output signal $y_2$.

During the operation of the control system, control unit ECU may execute the method illustrated in figure 5.

According to block 101, Control unit ECU evaluates the values of the engine speed $n$ at the first and the second instant (connectors 102a, 102b), as well as the value of the engine torque $\tau$ (connector 103) at the second instant. Moreover, control unit ECU evaluates the value of the control input $I_a$ at the first instant (connector 100).

According to block 104, control unit ECU predicts the value of the engine speed $n$ at the third instant (connector 105) using the above values of the engine speed $n$ at the second instant and of the engine torque $\tau$ at the second instant as inputs.

According to block 106, control unit ECU computes the difference between the value of the engine speed $n$ at the second instant and the predicted value of the engine speed $n$ at the third instant, thereby evaluating the predicted time variation of the engine speed $n$ (connector 107).

According to block 108, control unit ECU applies a proportional-integrative law to the predicted value of the engine speed $n$ at the third instant, thereby evaluating a portion of the linear combination (connector 109).

According to block 110, control unit ECU computes the difference between the value of the engine speed $n$ at the second instant and the value of the engine speed $n$ at the first instant, thereby evaluating the time variation of the engine speed $n$ over the time interval from the first to the second instant (connector 111).

According to block 112, control unit ECU computes the ratio (connector 113) of the above time variation of the engine speed $n$ to the value of the engine speed $n$ at the first instant.

According to block 114, control unit ECU computes the first parameter (connector 115) as the negative of the product of the coefficient $K_2$ and the above ratio.

According to blocks 116, 117, control unit ECU sums all the factors of the linear combination, thereby emitting the control input $I_a$ at the second instant (connector 119).

According to the invention, a control method is provided for controlling the auxiliary hydraulic unit 22 installed on the vehicle VH.

The control method comprises:

- evaluating a speed value of the engine speed $n$ at the first instant;
- evaluating a control value of the control input $I_a$ at the first instant;

- evaluating a time variation of the engine speed $n$ over a time interval from the first instant to the second instant;
- providing at least one mapping for determining the coefficient $K_2$ as a function of the control input $I_a$;
- determining the coefficient $K_2$ as a function of the control value;
- computing one parameter as the negative of a product of the determined coefficient $K_2$ and the ratio of said time variation to the speed value;
- emitting the control input $I_a$ at the second time instant with a further control value being equal to a linear combination of a plurality of parameters including the former control value and the computed parameter.

In view of the foregoing, the advantages of the control system and of the control method according to the invention are apparent.

The control system and the control method are able to compensate hydraulic flow deviations through the control valve 33 from a desired set point.

In this manner, a continuous flow function is obtained, which means that the flow through the control valve 33 remains constant even if the engine speed $n$ changes and without any manual intervention of the driver, which can concentrate on driving the vehicle VH.

It is clear that modifications can be made to the described control system and control method, which do not extend beyond the scope of protection defined by the claims.

The auxiliary unit 22 may form part of the vehicle VH.

## Claims

1. A control system for installation on a vehicle (VH) having an engine (25), an hydraulic pump (26) coupled to the engine (25) to be driven by the engine, a steering assembly (27), a first hydraulic line (30) configured to supply the steering assembly (27) with a first portion ($Q_s$) of an output flow rate ($Q$) of said pump (26) based on a flow rate request of the steering assembly (27), a second hydraulic line (32) configured to supply an auxiliary hydraulic unit (22) with a second portion ($Q_a$) of said output flow rate ($Q$), the auxiliary hydraulic unit (22) being adapted to be installed on the vehicle (VH) and to drive an implement (24) thereof with a constant rotational speed when the supplied second portion ($Q_a$) is constant, and a control valve (33) mounted on the second hydraulic line (30) for adjusting the second portion ($Q_a$) as a function of a control input ($I_a$); the control system comprising

   - first means (T1, ECU) for evaluating a speed value of an engine output speed ($n$) of said engine (25) at a first instant;
   - second means (ECU) for evaluating a first control value of said control input ($I_a$) at said first instant;
   - third means (T1, ECU) for evaluating a first time variation of the engine output speed ($n$) over a first time interval from said first instant to a second instant; and
   - a control unit (ECU) associated with said first, second, and third means (T1, ECU);
   wherein the control unit (ECU) stores at least one mapping for determining a first coefficient ($K_2$) as a function of said control input ($I_a$); and
   the first coefficient ($K_2$) being a ratio of a second coefficient ($K_1$) to a third coefficient ($K_3$);
   the second coefficient ($K_1$) representing the ratio of the second portion ($Q_a$), as a function of said control input ($I_a$), to a difference between said output flow rate ($Q$) and the first portion ($Q_s$); and
   the third coefficient ($K_3$) representing a partial derivative of the second coefficient ($K_1$) with respect to said control input ($I_a$);
   wherein the control unit (ECU) is configured to:

      - determine the first coefficient ($K_2$) as a function of the first control value;
      - computing a first parameter as the negative of a product of the determined first coefficient ($K_2$) and a ratio of said first time variation to the speed value;
      - emit said control input ($I_a$) at said second instant with a second control value being equal to a linear combination of a plurality of parameters including the first control value and the first parameter.

2. The control system of claim 1, wherein the mapping comprises a linear function of said control input ($I_a$) for mapping said control input ($I_a$) into the second coefficient ($K_2$); the third coefficient ($K_3$) being constant with respect to said control input ($I_a$).

3. The control system of claim 1 or 2, further comprising fourth means (T2, ECU) for generating a signal ($\mu$) associated to an output engine torque ($\tau$) of said engine (25); the control unit (ECU) storing a model of said engine (25), wherein the model at least links a second time variation of the engine output speed ($n$) to a value of said signal ($\mu$) associated to a torque value of the output engine torque ($\tau$) at said second instant;

the second time variation being over a second time interval from the second instant to a third instant;
wherein the control unit (ECU) is configured to predict said second time variation, based on the stored model and said torque value, when a magnitude of a further time variation of said signal ($\mu$) over said first time interval is greater than a threshold;
said parameters further including the predicted second time variation, when said magnitude is greater than the threshold; for example wherein the predicted second time variation is null when said magnitude is not greater than the threshold.

4. The control system of claim 3, wherein said parameters further include a second parameter representing the time integral of said predicted second time variation, when said magnitude is greater than the threshold; for example wherein the integral is null when said magnitude is not greater than the threshold.

5. The control system of claim 3 or 4, wherein the linear combination comprise one constant gain for said second time variation or two constant gains respectively for said second time variation and for said second parameter; the one or two constant gains being tuned based on an experimental calibration process with the purpose of maintaining the absolute value of another time variation of said second portion over said first time interval below a further threshold.

6. The control system of any one of claims from 3 to 5, wherein the model comprises a nonlinear transfer function ($P$) in a frequency ($s$) domain between said signal ($\mu$) and the engine output speed (n).

7. The control system of claim 6, wherein the prediction of the second time variation is based on a limit of said transfer function ($P$) as the frequency ($s$) goes to infinite.

8. A control method for controlling an auxiliary hydraulic unit installed on a vehicle (VH) having an engine (25), an hydraulic pump (26) driven by the engine (25), a steering assembly (27), a first hydraulic line (30) supplying the steering assembly (27) with a first portion ($Q_s$) of an output flow rate ($Q$) of said pump (26) based on a flow rate request of the steering assembly (27), a second hydraulic line (32) supplying the auxiliary hydraulic unit (22) with a second portion ($Q_a$) of said output flow rate ($Q$), the auxiliary hydraulic unit (22) being adapted to drive an implement (24) thereof with a constant rotational speed when the supplied second portion ($Q_a$) is constant, and a control valve (33) mounted on the second hydraulic line (30) for adjusting the second portion ($Q_a$) as a function of a control input ($I_a$); the control method comprising

- evaluating a speed value of an engine output speed ($n$) of said engine (25) at a first instant;
- evaluating a first control value of said control input ($I_a$) at said first instant;
- evaluating a first time variation of the engine output speed ($n$) over a first time interval from said first instant to a second instant;
- providing at least one mapping for determining a first coefficient ($K_2$) as a function of said control input ($I_a$), wherein the first coefficient ($K_2$) is a ratio of a second coefficient ($K_1$) to a third coefficient ($K_3$), wherein the second coefficient ($K_1$) represents the ratio of the second portion ($Q_a$), as a function of said control input ($I_a$), to a difference between said output flow rate ($Q$) and the first portion ($Q_s$), and wherein the third coefficient ($K_3$) represents a partial derivative of the second coefficient ($K_1$) with respect to said control input ($I_a$);
- determining the first coefficient ($K_2$) as a function of the first control value;
- computing a first parameter as the negative of a product of the determined first coefficient ($K_2$) and a ratio of said first time variation to the speed value;
- emitting said control input ($I_a$) at said second time instant with a second control value being equal to a linear combination of a plurality of parameters including the first control value and the first parameter.

9. The control method of claim 8, further comprising

- generating a signal ($\mu$) associated to an output engine torque ($\tau$) of said engine (25);
- providing a model of said engine (25), wherein the model at least links a second time variation of the engine output speed ($n$) to a value of said signal ($\mu$) associated to a torque value of the output engine torque ($\tau$) at said second instant; wherein the second time variation is over a second time interval from the second instant to a third instant;
- predicting said time variation based on the stored model and said torque value, when a magnitude of a further time variation of said signal ($\mu$) over said first time interval is greater than a threshold;

wherein said parameters further include the predicted second time variation, when said magnitude is greater than the threshold.

10. The control method of claim 9, wherein said parameters further include a second parameter representing the time integral of said second time variation, when said magnitude is greater than the threshold.

11. The control method of claim 9 or 10, wherein the model comprises a nonlinear transfer function ($P$) in a frequency domain between said signal ($\mu$) and the engine output speed ($n$).

12. The control method of claim 11, wherein the prediction of the second time variation is based on a limit of said transfer function ($P$) as the frequency ($s$) goes to infinite.

**Patentansprüche**

1. Steuersystem zum Einbau in ein Fahrzeug (VH) mit einem Motor (25), einer mit dem Motor (25) gekoppelten Hydraulikpumpe (26), die vom Motor angetrieben wird, einer Lenkanordnung (27), einer ersten Hydraulikleitung (30), die zum Versorgen der Lenkanordnung (27) mit einem ersten Teil (Qs) einer Ausgangsströmungsrate (Q) der Pumpe (26) basierend auf einer Strömungsratenanforderung der Lenkanordnung (27) eingerichtet ist, einer zweiten Hydraulikleitung (32), die zum Versorgen einer Hilfshydraulikeinheit (22) mit einem zweiten Teil (Qa) der Ausgangsströmungsrate (Q) eingerichtet ist, wobei die Hilfshydraulikeinheit (22) dazu ausgebildet ist, am Fahrzeug (VH) installiert zu werden und ein Arbeitsgerät (24) desselben mit einer konstanten Drehgeschwindigkeit anzutreiben, wenn der zugeführte zweite Teil (Qa) konstant ist, und einem an der zweiten Hydraulikleitung (30) angebrachten Steuerventil (33) zum Einstellen des zweiten Teils (Qa) in Abhängigkeit von einer Steuerungseingabe (Ia); wobei das Steuersystem umfasst:

erste Mittel (T1, ECU) zum Berechnen eines Drehzahlwerts einer Motorausgangsdrehzahl (n) des Motors (25) zu einem ersten Zeitpunkt;
zweite Mittel (ECU) zum Berechnen eines ersten Steuerwerts der Steuerungseingabe (Ia) zum ersten Zeitpunkt;
dritte Mittel (T1, ECU) zum Berechnen einer ersten zeitlichen Variation der Motorausgangsdrehzahl (n) über ein erstes Zeitintervall vom ersten Zeitpunkt bis zu einem zweiten Zeitpunkt; und
eine Steuereinheit (ECU), die dem ersten, zweiten und dritten Mittel (T1, ECU) zugeordnet ist;
wobei die Steuereinheit (ECU) mindestens eine Zuordnung zum Bestimmen eines ersten Koeffizienten (K2) in Abhängigkeit der Steuerungseingabe (Ia) speichert; und
wobei der erste Koeffizient (K2) ein Verhältnis eines zweiten Koeffizienten (K1) zu einem dritten Koeffizienten (K3) ist;
wobei der zweite Koeffizient (K1) das Verhältnis des zweiten Teils (Qa) in Abhängigkeit der Steuerungseingabe (Ia) zu einer Differenz zwischen der Ausgangsströmungsrate (Q) und dem ersten Teil (Qs) darstellt; und
wobei der dritte Koeffizient (K3) eine partielle Ableitung des zweiten Koeffizienten (K1) bezüglich der Steuerungseingabe (Ia) darstellt;
wobei die Steuereinheit (ECU) eingerichtet ist zum:

Bestimmen des ersten Koeffizienten (K2) als Funktion des ersten Steuerwerts;
Berechnen eines ersten Parameters als Negativ eines Produkts aus dem bestimmten ersten Koeffizienten (K2) und einem Verhältnis der ersten zeitlichen Variation zum Drehzahlwert;
Ausgeben der Steuerungseingabe (Ia) zu dem zweiten Zeitpunkt mit einem zweiten Steuerwert, der einer linearen Kombination einer Mehrzahl von Parametern einschließlich des ersten Steuerwerts und des ersten Parameters entspricht.

2. Steuersystem nach Anspruch 1, wobei die Zuordnung eine lineare Funktion der Steuerungseingabe (Ia) zum Zuordnen der Steuerungseingabe (Ia) zu dem zweiten Koeffizienten (K2) umfasst; wobei der dritte Koeffizient (K3) bezüglich der Steuerungseingabe (Ia) konstant ist.

3. Steuersystem nach Anspruch 1 oder 2, weiterhin umfassend vierte Mittel (T2, ECU) zum Erzeugen eines Signals ($\mu$), das einem Ausgangsmotordrehmoment ($\tau$) des Motors (25) zugeordnet ist; wobei die Steuereinheit (ECU) ein Modell des Motors (25) speichert, wobei das Modell zumindest eine zweite zeitliche Variation der Motorausgangsdrehzahl (n) mit einem Wert des Signals (μ) verknüpft, das einem Drehmomentwert des Ausgangsmotordrehmoments (τ) zum zweiten Zeitpunkt zugeordnet ist;

wobei die zweite zeitliche Variation sich über ein zweites Zeitintervall vom zweiten Zeitpunkt bis zu einem dritten Zeitpunkt erstreckt;
wobei die Steuereinheit (ECU) dazu eingerichtet ist, die zweite zeitliche Variation basierend auf dem gespeicherten Modell und dem Drehmomentwert vorherzusagen, wenn eine Größe einer weiteren zeitlichen Variation des Signals (μ) über das erste Zeitintervall größer als ein Grenzwert ist;
wobei die Parameter weiterhin die vorhergesagte zweite zeitliche Variation umfassen, wenn die Größe größer als der Grenzwert ist; wobei beispielsweise die vorhergesagte zweite zeitliche Variation Null ist, wenn die Größe nicht größer als der Grenzwert ist.

4. Steuersystem nach Anspruch 3, wobei die Parameter weiterhin einen zweiten Parameter umfassen, der das Zeitintegral der vorhergesagten zweiten zeitlichen Variation darstellt, wenn die Größe größer als der Grenzwert ist; wobei beispielsweise das Integral Null ist, wenn die Größe nicht größer als der Grenzwert ist.

5. Steuersystem nach Anspruch 3 oder 4, wobei die lineare Kombination eine konstante Verstärkung für die zweite zeitliche Variation oder zwei konstante Verstärkungen jeweils für die zweite zeitliche Variation und für den zweiten Parameter umfasst; wobei die eine oder zwei konstante Verstärkungen basierend auf einem experimentellen Kalibrierungsprozess abgestimmt werden, mit dem Zweck, den Absolutwert einer anderen zeitlichen Variation des zweiten Teils über das erste Zeitintervall unter einem weiteren Grenzwert zu halten.

6. Steuersystem nach einem der Ansprüche 3 bis 5, wobei das Modell eine nichtlineare Übertragungsfunktion (P) in einem Frequenzbereich (s) zwischen dem Signal (μ) und der Motorausgangsdrehzahl (n) umfasst.

7. Steuersystem nach Anspruch 6, wobei die Vorhersage der zweiten zeitlichen Variation auf einem Grenzwert der Übertragungsfunktion (P) basiert, wenn die Frequenz (s) gegen unendlich geht.

8. Steuerverfahren zur Steuerung einer Hilfshydraulikeinheit, die in einem Fahrzeug (VH) installiert ist, das einen Motor (25), eine vom Motor (25) angetriebene Hydraulikpumpe (26), eine Lenkanordnung (27), eine erste Hydraulikleitung (30), die die Lenkanordnung (27) mit einem ersten Teil (Qs) einer Ausgangsströmungsrate (Q) der Pumpe (26) basierend auf einer Strömungsratenanforderung der Lenkanordnung (27) versorgt, eine zweiten Hydraulikleitung (32), die die Hilfshydraulikeinheit (22) mit einem zweiten Teil (Qa) der Ausgangsströmungsrate (Q) versorgt, wobei die Hilfshydraulikeinheit (22) dazu ausgebildet ist, ein Arbeitsgerät (24) desselben mit konstanter Drehgeschwindigkeit anzutreiben, wenn der zugeführte zweite Teil (Qa) konstant ist, und ein an der zweiten Hydraulikleitung (30) angebrachtes Steuerventil (33) zum Einstellen des zweiten Teils (Qa) in Abhängigkeit von einer Steuerungseingabe (la) umfasst; wobei das Steuerverfahren umfasst:

Berechnen eines Drehzahlwerts einer Motorausgangsdrehzahl (n) des Motors (25) zu einem ersten Zeitpunkt;
Berechnen eines ersten Steuerwerts der Steuerungseingabe (la) zum ersten Zeitpunkt;
Berechnen einer ersten zeitlichen Variation der Motorausgangsdrehzahl (n) über ein erstes Zeitintervall von dem ersten Zeitpunkt bis zu einem zweiten Zeitpunkt;
Bereitstellen mindestens einer Zuordnung zum Bestimmen eines ersten Koeffizienten (K2) in Abhängigkeit von der Steuerungseingabe (la), wobei der erste Koeffizient (K2) ein Verhältnis eines zweiten Koeffizienten (K1) zu einem dritten Koeffizienten (K3) ist, wobei der zweite Koeffizient (K1) das Verhältnis des zweiten Teils (Qa) in Abhängigkeit der Steuerungseingabe (la) zu einer Differenz zwischen der Ausgangsströmungsrate (Q) und dem ersten Teil (Qs) darstellt, und wobei der dritte Koeffizient (K3) eine partielle Ableitung des zweiten Koeffizienten (K1) bezüglich der Steuerungseingabe (la) darstellt;
Bestimmen des ersten Koeffizienten (K2) in Abhängigkeit vom ersten Steuerwert;
Berechnen eines ersten Parameters als Negativ eines Produkts aus dem bestimmten ersten Koeffizienten (K2) und einem Verhältnis der ersten zeitlichen Variation zum Drehzahlwert;
Ausgeben der Steuerungseingabe (la) zu dem zweiten Zeitpunkt mit einem zweiten Steuerwert, der einer linearen Kombination einer Mehrzahl von Parameter einschließlich des ersten Steuerwerts und des ersten Parameters entspricht.

9. Steuerverfahren nach Anspruch 8, weiterhin umfassend:

Erzeugen eines Signals (μ), das einem Ausgangsmotordrehmoment (τ) des Motors (25) zugeordnet ist;

Bereitstellen eines Modells des Motors (25), wobei das Modell zumindest eine zweite zeitliche Variation der Motorausgangsdrehzahl (n) mit einem Wert des Signals ($\mu$) verknüpft, das einem Drehmomentwert des Ausgangsmotordrehmoment ($\tau$) zum zweiten Zeitpunkt zugeordnet ist; wobei sich die zweite zeitliche Variation über ein zweites Zeitintervall vom zweiten Zeitpunkt bis zu einem dritten Zeitpunkt erstreckt;

Vorhersagen der zeitlichen Variation basierend auf dem gespeicherten Modell und dem Drehmomentwert, wenn eine Größe einer weiteren zeitlichen Variation des Signals ($\mu$) über das erste Zeitintervall größer als ein Grenzwert ist;

wobei die Parameter weiterhin die vorhergesagte zweite zeitliche Variation umfassen, wenn die Größe größer als der Grenzwert ist.

10. Steuerverfahren nach Anspruch 9, wobei die Parameter weiterhin einen zweiten Parameter umfassen, der das Zeitintegral der zweiten zeitlichen Variation darstellt, wenn die Größe größer als der Grenzwert ist.

11. Steuerverfahren nach Anspruch 9 oder 10, wobei das Modell eine nichtlineare Übertragungsfunktion (P) in einem Frequenzbereich zwischen dem Signal ($\mu$) und der Motorausgangsdrehzahl (n) umfasst.

12. Steuerverfahren nach Anspruch 11, wobei die Vorhersage der zweiten zeitlichen Variation auf einem Grenzwert der Übertragungsfunktion (P) basiert, wenn die Frequenz (s) gegen unendlich geht.

## Revendications

1. Un système de commande pour une installation sur un véhicule (VH) comportant un moteur (25), une pompe hydraulique (26) couplée au moteur (25) pour être entraînée par le moteur, un ensemble de direction (27), une première conduite hydraulique (30) configurée pour alimenter l'ensemble de direction (27) avec une première partie ($Q_S$) d'un débit de sortie (Q) de ladite pompe (26) sur la base d'une demande de débit de l'ensemble de direction (27), une seconde conduite hydraulique (32) configurée pour alimenter une unité hydraulique auxiliaire (22) avec une seconde partie ($Q_a$). dudit débit de sortie (Q), l'unité hydraulique auxiliaire (22) étant adaptée pour être installée sur le véhicule (VH) et pour entraîner un outil (24) de celui-ci avec une vitesse de rotation constante lorsque la seconde partie alimentée ($Q_a$) est constante, et une vanne de régulation (33) montée sur la seconde conduite hydraulique (30) pour régler la seconde partie ($Q_a$) en fonction d'une entrée de commande ($I_a$) ; le système de commande comprenant

- un premier moyen (T1, ECU) pour évaluer une valeur de vitesse d'une vitesse de sortie d'un moteur (n) dudit moteur (25) à un premier instant ;
- un deuxième moyen (ECU) pour évaluer une première valeur de contrôle de ladite entrée de commande ($I_a$) audit premier instant ; un troisième moyen (T1, ECU) pour évaluer une première variation temporelle de la vitesse de sortie du moteur (n) sur un premier intervalle de temps depuis ledit premier instant jusqu'à un deuxième instant ; et
- une unité de commande (ECU) associée auxdits premier, deuxième et troisième moyens (T1, ECU) ;
dans lequel l'unité de commande (ECU) stocke au moins une cartographie pour déterminer un premier coefficient ($K_2$) en fonction de ladite entrée de commande ($I_a$) ; et
le premier coefficient ($K_2$) étant un rapport d'un deuxième coefficient ($K_1$) par rapport à un troisième coefficient ($K_3$) ;
le deuxième coefficient ($K_1$) représentant le rapport de la deuxième partie ($Q_a$), en fonction de ladite entrée de commande ($I_a$), à une différence entre ledit débit de sortie (Q) et la première partie ($Q_s$) ; et
le troisième coefficient ($K_3$) représentant une dérivée partielle du deuxième coefficient ($K_1$) par rapport à ladite entrée de commande ($I_a$) ;
dans lequel l'unité de commande (ECU) est configurée pour :

- déterminer le premier coefficient ($K_2$) en fonction de la première valeur de contrôle ;
- calculer un premier paramètre comme étant le négatif d'un produit du premier coefficient déterminé ($K_2$) et un rapport entre ladite première variation temporelle et la valeur de vitesse ;
- émettre ladite entrée de commande ($I_a$) audit deuxième instant avec une seconde valeur de contrôle étant égale à une combinaison linéaire d'une pluralité de paramètres comprenant la première valeur de contrôle et le premier paramètre.

2. Le système de commande selon la Revendication 1, dans lequel la cartographie comprend une fonction linéaire de ladite entrée de commande ($I_a$) pour cartographier ladite entrée de commande ($I_a$) dans le deuxième coefficient ($K_2$) ; le troisième coefficient ($K_3$) étant constant par rapport à ladite entrée de commande ($I_a$).

3. Le système de commande selon la Revendication 1 ou la Revendication 2, comprenant en outre un quatrième moyen (T2, ECU) pour générer un signal ($\mu$) associé à un couple moteur de sortie ($\tau$) dudit moteur (25) ; l'unité de commande (ECU) stockant un modèle dudit moteur (25), dans lequel le modèle associant au moins une seconde variation temporelle de la vitesse de sortie du moteur ($n$) à une valeur dudit signal ($\mu$) associée à une valeur de couple du couple moteur de sortie ($\tau$) audit deuxième instant ;

la seconde variation temporelle s'étalant sur un second intervalle de temps allant du deuxième instant à un troisième instant ;
dans lequel l'unité de commande (ECU) est configurée pour prédire ladite seconde variation temporelle, sur la base du modèle stocké et de ladite valeur de couple, lorsqu'une amplitude d'une autre variation temporelle dudit signal ($\mu$) sur ledit premier intervalle de temps est supérieure à un seuil ;
lesdits paramètres incluant en outre la seconde variation temporelle prédite, lorsque ladite amplitude est supérieure au seuil ; par exemple dans lequel la seconde variation temporelle prédite est nulle lorsque ladite amplitude n'est pas supérieure au seuil.

4. Le système de commande selon la Revendication 3, dans lequel lesdits paramètres comprennent en outre un second paramètre représentant l'intégrale temporelle de ladite seconde variation temporelle prédite, lorsque ladite amplitude est supérieure au seuil ; par exemple dans lequel l'intégrale est nulle lorsque ladite amplitude n'est pas supérieure au seuil.

5. Le système de commande selon la Revendication 3 ou la Revendication 4, dans lequel la combinaison linéaire comprend un gain constant pour ladite seconde variation temporelle ou deux gains constants respectivement pour ladite seconde variation temporelle et pour ledit second paramètre ; le ou les deux gains constants étant réglés sur la base d'un processus d'étalonnage expérimental dans le but de maintenir la valeur absolue d'une autre variation temporelle de ladite seconde partie par rapport audit premier intervalle de temps en dessous d'un autre seuil.

6. Le système de commande selon l'une quelconque des revendications 3 à 5, dans lequel le modèle comprend une fonction de transfert non linéaire ($P$) dans un domaine fréquentiel ($s$) entre ledit signal ($\mu$) et la vitesse de sortie du moteur ($n$).

7. Le système de commande selon la Revendication 6, dans lequel la prédiction de la seconde variation temporelle est basée sur une limite de ladite fonction de transfert ($P$) lorsque la fréquence ($s$) est illimitée.

8. Un procédé de commande permettant de contrôler une unité hydraulique auxiliaire installée sur un véhicule (VH) comportant un moteur (25), une pompe hydraulique (26) entraînée par le moteur (25), un ensemble de direction (27), une première conduite hydraulique (30) alimentant l'ensemble de direction (27) avec une première partie ($Q_s$) d'un débit de sortie ($Q$) de ladite pompe (26) sur la base d'une demande de débit de l'ensemble de direction (27), une seconde conduite hydraulique (32) alimentant l'unité hydraulique auxiliaire (22) avec une seconde partie ($Q_a$) dudit débit de sortie ($Q$), l'unité hydraulique auxiliaire (22) étant adaptée pour entraîner un outil (24) de celui-ci avec une vitesse de rotation constante lorsque la seconde partie alimentée ($Q_a$) est constante, et une vanne de régulation (33) montée sur la seconde conduite hydraulique (30) pour régler la seconde partie ($Q_a$) en fonction d'une entrée de commande ($I_a$) ; le procédé de commande comprenant

- l'évaluation d'une valeur de vitesse d'une vitesse de sortie d'un moteur ($n$) dudit moteur (25) à un premier instant ;
- l'évaluation d'une première valeur de contrôle de ladite entrée de commande ($I_a$) audit premier instant ;
- l'évaluation d'une première variation temporelle de la vitesse de sortie du moteur ($n$) sur un premier intervalle de temps depuis ledit premier instant jusqu'à un deuxième instant ;
- la fourniture d'au moins une cartographie pour déterminer un premier coefficient ($K_2$) en fonction de ladite entrée de commande ($I_a$), dans lequel le premier coefficient ($K_2$) est un rapport d'un deuxième coefficient ($K_1$) à un troisième coefficient ($K_3$), dans lequel le deuxième coefficient ($K_1$) représente le rapport de la seconde partie ($Q_a$), en fonction de ladite entrée de commande ($I_a$), à une différence entre ledit débit de sortie ($Q$) et la première partie ($Q_s$), et dans lequel le troisième coefficient ($K_3$) représente une dérivée partielle du deuxième coefficient ($K_1$) par rapport à ladite entrée de commande ($I_a$)
- la détermination du premier coefficient ($K_2$) en fonction de la première valeur de contrôle ;

- le calcul d'un premier paramètre comme étant le négatif d'un produit du premier coefficient déterminé $(K_2)$ et un rapport entre ladite première variation temporelle et la valeur de vitesse ;
- l'émission de ladite entrée de commande $(I_a)$ audit deuxième instant temporel avec une seconde valeur de contrôle étant égale à une combinaison linéaire d'une pluralité de paramètres comprenant la première valeur de contrôle et le premier paramètre.

9. Le procédé de commande selon la Revendication 8, comprenant en outre

- la génération d'un signal $(\mu)$ associé à un couple moteur de sortie $(\tau)$ dudit moteur (25) ;
- la fourniture d'un modèle dudit moteur (25), dans lequel le modèle relie au moins une seconde variation temporelle de la vitesse de sortie du moteur $(n)$ à une valeur dudit signal $(\mu)$ associée à une valeur de couple du couple moteur de sortie $(\tau)$ audit deuxième instant; dans lequel la seconde variation temporelle s'étend sur un second intervalle de temps allant du deuxième instant au troisième instant ;
- la prévision de ladite seconde variation temporelle, sur la base du modèle stocké et de ladite valeur de couple, lorsqu'une amplitude d'une autre variation temporelle dudit signal $(\mu)$ sur ledit premier intervalle de temps est supérieure à un seuil ;

dans lequel lesdits paramètres incluent en outre la seconde variation temporelle prédite, lorsque ladite amplitude est supérieure au seuil.

10. Le procédé de commande selon la Revendication 9, dans lequel lesdits paramètres comprennent en outre un second paramètre représentant l'intégrale temporelle de ladite seconde variation temporelle, lorsque ladite amplitude est supérieure au seuil.

11. Le procédé de commande selon l'une quelconque des revendications 9 à 10, dans lequel le modèle comprend une fonction de transfert non linéaire $(P)$ dans un domaine fréquentiel entre ledit signal $(\mu)$ et la vitesse de sortie du moteur $(n)$

12. Le procédé de commande selon la Revendication 11, dans lequel la prédiction de la seconde variation temporelle est basée sur une limite de ladite fonction de transfert $(P)$ lorsque la fréquence (s) est illimitée.

FIG. 1

FIG. 2

FIG. 3

EP 4 047 246 B1

# FIG. 4

# FIG. 5

**EP 4 047 246 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4485623 A